**Europäisches Patentamt**

**European Patent Office**

**Office européen des brevets**

(19)

(11) Veröffentlichungsnummer: **0 272 329**
**A1**

(12) # EUROPÄISCHE PATENTANMELDUNG
Veröffentlicht nach Art. 158 Abs. 3 EPÜ

(21) Anmeldenummer: 87903421.3

(22) Anmeldetag: 22.05.87

Daten der zugrundeliegenden internationalen Anmeldung:

(86) Internationale Anmeldenummer:
PCT/JP87/00329

(87) Internationale Veröffentlichungsnummer:
WO87/07346 (03.12.87 87/27)

(51) Int. Cl.³: **F 16 D 13/72**

(30) Priorität: 26.05.86 JP 120799/86

(43) Veröffentlichungstag der Anmeldung:
29.06.88 Patentblatt 88/26

(84) Benannte Vertragsstaaten:
DE

(71) Anmelder: **KABUSHIKI KAISHA DAIKIN SEISAKUSHO
1-1, Kidamotomiya 1-chome
Neyagawa-shi Osaka 572(JP)**

(72) Erfinder: **TAKEUCHI, Hiroshi
30-11, Shimokosaka 1-chome
Higashiosaka-shi Osaka 577(JP)**

(74) Vertreter: **Flügel, Otto, Dipl.-Ing.
Dipl.-Ing. Otto Flügel Dipl.-Ing. Manfred Säger
Patentanwälte Cosimastrasse 81 Postfach 810 540
D-8000 München 81(DE)**

(54) **KÜHLVORRICHTUNG FÜR EINE GEZOGENE KUPPLUNG.**

(57) Kühlmechanismus einer Zugtypkupplung, in der eine äußere Umfangskante einer dem Schwungrad gegenüberliegenden Seite eines äußeren Umfangsringbereichs (12) durch einen Drahtring (10) von einer Kupplungsabdeckung (9) unterstützt wird, in der eine innere Umfangskante einer schwungradseitigen Seite des äußeren Umfangringbereichs (12) durch einen Drehgelenksvorsprung (14) einer Druckplatte (7) gestützt wird, in der ein ringförmiger Halter (13), der die dem Schwungrad gegenüberliegende Seite des äußeren Umfangsringbereichs (13) bedeckt, durch Verwendung von Fensterlöchern (15) einer Membranfeder (11) installiert wird, die Schlitze (16) aufweist, die sich gegen eine Mittelachse von einer Vielzahl von Stellen einer inneren Umfangskante des äußeren Umfangsringbereichs (12) durch die Fensterlöcher erstrecken, in der Fußstücke (23) vorgesehen sind, die sich von einer inneren Umfangskante des ringförmigen Halters (13) durch die genannten Fensterlöcher (15) gegen die Seite des Schwungrads (1) zur Festlegung an einer Druckplatte (7) erstrecken, in der Lamellenstücke (26) vorgesehen sind, die sich von der Innenumfangskante des Halters gegen den verbleibenden Teil der Fensterlöcher (15) erstrecken und während der Drehung Luft in die Fensterlöcher pressen, und in der ein Stopper (27) vorgesehen ist, der sich von einer äußeren Umfangskante des Halters gegen die Seite der Membranfeder (1) erstreckt zur Eingrenzung einer Bewegung der Druckplatte (7) zur Seite des Schwungrades (1) im Zustand einer Einheit des Kupplungsabdeckungsaufbaus (6).

./...

EP 0 272 329 A1

F I G. 1

# B E S C H R E I B U N G

Kühlmechanismus für eine Zugtypkupplung

## Fachgebiet

Diese Erfindung betrifft einen Kühlmechanismus einer Zugtypkupplung, der für Autos und andere Fahrzeuge angewendet werden kann.

## Hintergrund der Erfindung

Im allgemeinen wird in einer Kupplung für ein Auto usw. ein Belag auf einem äußeren Umfang einer ausgangsseitigen Kupplungsscheibe von einem Schwungrad angepreßt oder gelöst zwischen dem Schwungrad, das ein Motordrehmoment empfängt, und einer Druckplatte, so daß eine Motorkraft übertragen oder unterbrochen wird.
Folglich entsteht an der Druckplatte und dem Belag ein Temperaturanstieg, der eine Verformung der Reiboberfläche der Druckplatte sowie einen frühzeitigen Verschleiß und Schwunderscheinungen des Belags verursacht. Um diese Probleme zu umgehen, sind verschiedene Kühlmechanismen, bei denen die Reibelemente der Druckplatte und des Belags von außerhalb der Kupplungsabdeckung mit Kühlluft versorgt werden, vorgeschlagen worden. In diesen Mechanismen wird die Druckplatte jedoch von eingeleiteter Luft gekühlt, so daß eine relative Geschwindigkeit der Außenluft, wobei die Drehung der Kupplung genutzt wird, nicht positiv verwendet werden kann, so daß ein Mangel an Kühlung die Folge ist. Außerdem ist bei Verwendung einer Membranfeder für die Zugtyp-Kupplung ein Stegbolzen zum unterstützenden Festlegen der Membranfeder an einem Kupplungsgehäuse nicht mehr brauchbar, so daß ein separater Sperrmechanismus für die Membranfeder erforderlich wird. Außerdem wird beim Transport eines Kupplungsabdeckungsaufbaus, bei dem keine Kupplungsscheibe beinhaltet ist, vom Kupplungshersteller zu einem Automobilhersteller oder beim dortigen Lagern in einer Position, in der die Druckplatte nach unten gehängt ist, die Druckplatte aufgrund ihres Gewichtes oder der Vibration schwingen, so daß eine Riemenplatte, die die Druckplatte mit der Kupplungsabdeckung verbindet, übermäßig gebogen oder im Extremfall verformt wird. Daher wurden gewöhnlicherweise separate Klemmglieder (wie z.B. Abstandshalter, Bolzen usw.) zur Klemmung der Druckplatte an ihr angebracht, um die obengenannten Probleme während des Transports oder des Lagerns einer Einheit des Kupplungsaufbaus zu vermeiden. Dieses Verfahren hat jedoch zusätzliche Arbeit durch Entfernung der Klemmglieder von der Druckplatte, wenn diese an einem Auto montiert wird, und durch vorheriges Anbringen der Klemmglieder an der Druckplatte verursacht.

## Offenbarung der Erfindung

Eine Aufgabe der Erfindung ist es, an einer Druckplatte befestigten Haltern die Funktion einer Kühlrippe und einer Lamelle zu verleihen zur Einleitung eines Kühlluftstroms, um einen positiven Kühleffekt zu erhalten, indem man die Tatsache nutzt, daß Fensterlöcher (gewöhnliche Stegbolzen-Bohrungen) einer Membranfeder in der Zugtyp-Kupplung unbrauchbar werden, um sie auch als Sperrmechanismus für die Membranfeder dienen zu lassen, und außerdem, um ihnen die Funktion eines Klemmgliedes zur Verhinderung einer Schwingung der Druckplatte während des Transports und der Lagerung einer Einheit eines Kupplungsaufbaus zu verleihen.

Zugtyp-Kupplung mit einer an einem Schwungrad befestigten Kupplungsabdeckung, einer Membranfeder, von der ein äußerer Umfangsbereich an einer Schwungradseite eines inneren Umfangsbereiches der Kupplungsabdeckung über einen Drahtring gehalten wird, mit einer Druckplatte, die eine schwungradseitige, innere Umfangskante eines äußeren peripheren, ringförmigen Bereichs der Membranfeder unterstützt, mit einer Riemenplatte, die die Druckplatte mit der Kupplungsabdeckung verbindet, und einer zwischen der Druckplatte und dem Schwungrad angeordneten Kupplungsscheibe, wobei die Kupplungsscheibe durch Ziehen in eine dem Schwungrad entgegengesetzte Richtung von Kopfenden von Ausrückhebeln, die zwischen Schlitzen, die sich zu einer Mittelachsenseite hin von einer Vielzahl von Fensterlöchern erstrecken, die an einer Innenseite des genannten, äußeren Umfangsringbereichs angeordnet sind, gelöst wird;
die vorliegende Erfindung betrifft einen Kühlmechanismus einer Zugtypkupplung, die einen ringförmigen Halter aufweist, der eine entgegengesetzt zum Schwungrad liegende Seite des genannten, äußeren Umfangsringbereichs abdeckt, ein Fußstück, das sich von einer inneren Umfangskante des Halters durch einen Teil der genannten Fensterlöcher zu der Schwungradseite hin erstreckt und an der Druckplatte festgelegt wird, ein Lamellenstück, das sich von der inneren Umfangskante des Halters zu dem verbleibenden Teil der Fensterlöcher erstreckt, um während der Drehung Luft in die Fensterlöcher zu pressen, und einen Stopper, der sich von einer äußeren Umfangskante des Halters zu einer Seite der Membranfeder erstreckt, und so die Bewegung der Druckplatte gegen die Schwungradseite eingrenzen soll, wenn die Kupplungsscheibe nicht angebracht ist.

Kurze Beschreibung der Zeichungen

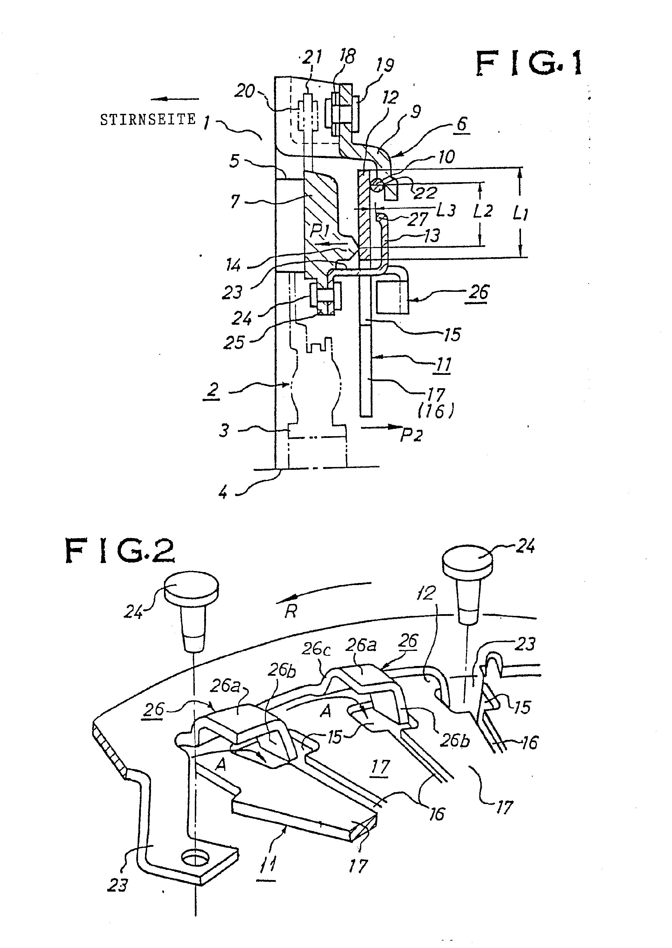

Figur 1 ist eine vertikale Schnittansicht eines Kühlmechanismus gemäß der Erfindung. Figur 2 ist eine Teil-Schrägansicht.

Beste Ausführungsart der Erfindung

1 in Figur 1 stellt ein Schwungrad dar, das direkt mit einer Kurbelwelle (ohne Abbildung) eines Motors gekuppelt ist.
2 bezeichnet eine ausgangsseitige Kupplungsscheibe, eine zentrale Keilnabe 3 ist auf eine Ausgangswelle (mit einer Mittelachse 4) aufgekeilt, die auch als Eingangswelle eines nachfolgenden Getriebes dient. Eine Vorderseite (linke Seite der Zeichnung) eines äußeren Umfangsbelags 5 ist auf das Schwungrad 1 gerichtet und eine Rückseite davon ist auf eine Druckplatte 7 in einem Kupplungsabdeckungsaufbau 6 gerichtet, wobei der Belag 5 so konstruiert ist, daß er von der Druckplatte 7 zum Zeitpunkt des Einrückens der Kupplung auf das Schwungrad 1 gepreßt und zum Zeitpunkt des Ausrückens der Kupplung vom Schwungrad 1 gelöst wird.

Der Kupplungsabdeckungsaufbau 6 besteht aus einer am Schwungrad 1 festgelegten Kupplungsabdeckung 9, einer Membranfeder 11, deren äußerer Umfangsbereich durch einen Drahtring 10 gestützt wird, der in ein ringförmig gestuftes Teil 22 der Schwungradseite 1 in einem inneren Umfangsbereich der Kupplungsabdeckung 5 eingepaßt ist, wobei die genannte Druckplatte 7 eine schwungradseitige innere Umfangskante eines äußeren Umfangsringbereiches 12 der Membranfeder 11 unterstützt, eine Riemenplatte 18 die Druckplatte 7 und die Kupplungsabdeckung 9 verbindet, und ein ringförmiger Halter 13 (die Luft-Widerstands-(Leit-)Flächenplatte) neu in der vorliegenden Erfindung eingesetzt wird. L1 bezeichnet eine radiale Breite des äußeren Umfangsringbereichs 12 der Membranfeder 1, und der Ringbereich wird von dem Drahtring 10 und einem Drehgelenksvorsprung 14 der Druckplatte 7 in einer dazwischenliegenden Breite L2 unterstützt. Eine Vielzahl von Fensterlöchern 15 ist auf einer Innenseite des äußeren Umfangsringbereichs 12 im gleichen Umfang und mit gleichen Zwischenräumen angeordnet. Schlitze 16 erstrecken sich radial nach innen gerichtet von jedem Fensterloch 15, und ein in Figur 2 gezeigter Ausrückhebel 17 ist zwischen den benachbarten Schlitzen 16 & 16 ausgebildet. Die Membranfeder 11 übt eine Federkraft P1 auf die Druckplatte 7 von dem äußeren Umfangsringbereich 12 durch ein Drehgelenk 14 aus, so daß der Belag 5 an das Schwungrad 1 gepreßt wird, um den Einrückzustand der Kupplung aufrechtzuerhalten. Um die Kupplung außer Eingriff zu bringen, wird auf ein Kopfende des Ausrückhebels 17 über ein Ausrücklager (ohne Abbildung) eine Ausrückbelastung P2 ausgeübt, um die Feder zu veranlassen, sich aus dem äußeren Umfangsringbereich 12 zurückzuziehen, indem der Drahtring 10 als Drehgelenkspunkt verwendet wird, wodurch der Belag gelöst wird.

Ein Ende der Riemenplatte 18 ist durch eine Niete 19 an der Kupplungsabdeckung 9 festgelegt und erstreckt sich in einer der Drehrichtung der Kupplung entgegengesetzten Richtung (normal zur Ebene von Fig. 1), und das andere Ende ist durch eine weitere Niete 20 an einem äußeren Umfangsvorsprung 21 der Druckplatte 7 festgelegt und übt einen ständigen Druck auf die Druckplatte 7 aus, um sie von dem Schwungrad 1 leicht beabstandet zu halten.

Der ringförmige Halter 13, der gemäß der Erfindung neu eingesetzt wird, bedeckt eine dem Schwungrad 1 gegenüberliegende Fläche des äußeren Umfangsringbereiches 12 der Membranfeder 11, wobei ein kleiner Zwischenraum gelassen wird, ein streifenförmiges Fußstück 23 erstreckt sich von seiner inneren Umfangskante zu der Schwungradseite 1 durch einen Teil der Fensterlöcher 15, und ein Kopfende des Fußstücks 23 ist rechtwinkling gebogen und wird durch eine Niete 24 an einem inneren Umfangsvorsprung 25 der Druckplatte 7 festgelegt.

Ein Lamellenstück 26 erstreckt sich gegen das Fensterloch 15 von einer inneren Umfangskante des ringförmigen Halters 13, der kein Fußstück 23 aufweist. Das Lamellenstück 26 besteht aus einem Abdeckbereich 26a, der sich zu der Mittelachsenseite über einen aufrechten Bereich 26c erstreckt, der von der inneren Umfangskante des Halters 13 leicht in einer dem Schwungrad 1 entgegengesetzte Richtung ansteigt und das Fensterloch 15 abdeckt, und aus einem Schaufelbereich 26b, der gekrümmt ist und sich zur Fensterlochseite 15 hin von einer Kante an der Rückseite hinsichtlich der Drehrichtung R des Abdeckbereichs 26a erstreckt.

Demgemäß ist das Lamellenstück 26 so ausgelegt, daß es bei Drehung der Kupplung in Richtung des Pfeils R aus Figur 2 zwangsläufig Luft      außerhalb der Kupplung in Richtung des Pfeils A in das Luftloch 15 preßt.

Ein kurzer, zylindrischer Stopper 27 erstreckt sich integriert in eine äußere Umfangskante des ringförmigen Halters 13 zur Seite der Membranfeder 11 hin, und zwischen einem Kopfende des Stoppers 27 und dem äußeren Umfangsringbereich 12 ist ein kleiner Zwischenraum ausgebildet. Wenn die Kupplung transportiert oder für einen langen Zeitraum gelagert wird, und sich der Kupplungsabdeckungsbereich in einem Zustand befindet, in dem das Schwungrad 1 und die Kupplungsscheibe 2 aus dem Zustand von Figur 1 entfernt sind, tritt der Stopper 27 im Zuge der Verformung der Membranfeder 11 aus einem freien Zustand heraus in Berührung mit dem äußeren Umfangsringbereich 12, so daß eine Schwingung der Druckplatte 7 aufgrund des Spielraums L3 verhindert wird. Weiterhin kann der Spielraum L3 in dem Maß verkleinert werden, daß der äußere Umfangsringbereich 27 den Stopper 27 berührt und zwangsläufig die Druckplatte 7 von dem Belag 5 trennt, wenn die Kupplung ausgerückt im Zustand von Figur 1 ist.

Im folgenden wird die Funktionsweise beschrieben. Nachdem der Kupplungsaufbau 6 in ein Auto usw. eingebaut wurde, trifft im Betriebszustand der ringförmige Halter 13, der integriert in die Druckplatte 7 durch die Niete 24 festgelegt ist, auf Luft außerhalb der Kupplung und kommt so mit dem Teil der Luft in Berührung, der auf der Kupplungsdrehung basierend eine relativ hohe Geschwindigkeit aufweist; da das Lamellenstück 26 auch in den Halter 13 integriert ist, haben beide die Funktion einer Kühlrippe.
Folglich kann die Wärme der Druckplatte zwangsläufig von einer außen befindlichen Oberfläche der Kupplung abgegeben werden.

Außerdem erstreckt sich das Fußstück 23 durch das Fensterloch 15, so daß es als Stopperglied für die Membranfeder 11 dient und so die Membranfeder in ihrer korrekten Position hält, und gleichzeitig an den pressenden Teilen keine relative Gleitbewegung zwischen der Membranfeder 11, dem Drahtring 10 und dem Drehgelenksvorsprung 14 auftritt. Darüberhinaus berührt der Stopper 27, wenn die Kupplung ohne Schwungrad und Kupplungsscheibe transportiert oder gelagert wird, den äußeren Umfangsringbereich 12 und grenzt so eine Bewegung der Druckplatte gegen das Schwungrad 1 ein.

### Wirkung der Erfindung

Wie oben beschrieben, sind der ringförmige Halter 13 und das in ihn integrierte Lamellenstück 26 in die Druckplatte 7 durch das Fußstück 23 integriert und kommen direkt mit der Luft außerhalb der Kupplung in Berührung; so daß die hohe Relativgeschwindigkeit im Verhältnis zur Außenluft während der Drehung der Kupplung erhalten, die Wärme der Druckplatte 7 zwangsläufig an die Außenluft abgegeben und somit der Kühleffekt der Druckplatte 7 und des Belags 5 verbessert werden kann. Außerdem dient das Fußstück 23 aufgrund seiner Verbindung von dem Halter 13 mit der Druckplatte 7 über das Fensterloch 15, das für die Zugtypkupplung unbrauchbar wird, als Sperrmechanismus der Membranfeder 11 und beseitigt damit die Notwendigkeit eines Einzweck-Sperrmechanismus, so daß die ganze Struktur vereinfacht werden kann. Da das Lamellenstück 26 an dem Fensterloch vorgesehen ist, durch das sich kein Fußstück 23 erstreckt, kann außerdem die Luft außerhalb der Kupplung zwangsläufig in die Kupplung durch das Fensterloch 15

gepreßt werden, um Nachteile wie die Verformung einer Reiboberfläche der Druckplatte 7 und das Ausglühen des Belags 5 zu beseitigen, sogar unter schwierigen Betriebsbedingungen, wie häufig wiederholtes Ein- und Ausrücken der Kupplung. Da der Stopper 27 in die äußere Umfangskante des ringförmigen Halters 13 integriert ist, können außerdem Verformungen und Schäden an der Riemenplatte 18, die durch die Schwingung der Druckplatte verursacht werden, sicher vermieden werden, wenn die Einheit des Kupplungsabdeckungsaufbaus 6 ohne Kupplungsscheibe 2 vor der Montage an das Schwungrad 1 transportiert oder gelagert wird. Indem der Spielraum L3 verhältnismäßig klein gehalten wird, kann die Druckplatte 7 zwangsläufig durch das Fußstück 23 von dem Belag 5 getrennt werden zu dem Zeitpunkt des Ausrückens, wo der Ausrückhebel 17 in Richtung des Pfeils p2 gezogen wird, so daß auch eine Schlupferscheinung sicher verhindert werden kann.

10

Ansprüche

(1)   Eine Zugtypkupplung,
gekennzeichnet durch eine an einem Schwungrad befestigte Kupplungsabdeckung (9), eine Membranfeder
(11), deren äußerer Umfangsbereich an einer
Schwungradseite eines inneren Umfangsbereichs der
Kupplungsabdeckung (9) durch einen Drahtring (10)
gehalten wird, eine Druckplatte (7), die eine
schwungradseitige, innere Umfangskante eines
äußeren Umfangsringbereichs (12) der Membranfeder
(11) unterstützt, eine Riemenplatte (18), die die
Druckplatte (7) mit der Kupplungsabdeckung (9)
verbindet, und eine Kupplungsscheibe (2), deren
äußerer Umfangsbelag (5) zwischen der Druckplatte
(7) und dem Schwungrad (1) angeordnet ist, wobei
die Kupplungsscheibe durch Ziehen der Kopfenden
von Ausrückhebeln (17) gelöst wird, die zwischen
Schlitzen (16) angeordnet sind, die sich zu einer
Mittelachsenseite von einer Vielzahl von Fensterlöchern erstrecken, die an einer Innenseite des
genannten äußeren Umfangsringbereichs (12) angeordnet sind;
ein Kühlmechanismus der Zugtypkupplung,
gekennzeichnet durch einen ringförmigen Halter
(13), der eine dem Schwungrad gegenüberliegende
Seite des genannten äußeren Umfangsringbereichs
(12) abdeckt, ein Fußstück (23), das sich von
einer Innenumfangskante des Halters durch einen
Teil der genannten Fensterlöcher (15) zur Seite
des Schwungrads (1) erstreckt und an der Druckplatte (7) festgelegt wird, ein Lamellenstück
(26), das sich von der Innenumfangskante des Halters zu dem verbleibenden Teil der Fensterlöcher (15) erstreckt, um während der Drehung Luft in
die Fensterlöcher zu pressen, und einen Stopper
(27), der sich von einer äußeren Umfangskante des
Halters zu einer Seite der Membranfeder (11) erstreckt, um eine Bewegung der Druckplatte (7) gegen die Seite des Schwungrads (1) in dem Zustand,
in dem keine Kupplungsscheibe (2) an einer Einheit
eines Kupplungsabdeckungsaufbaus (6) angebracht
ist, einzugrenzen.

(2)   Ein Kühlmechanismus einer Zugtypkupplung nach Anspruch 1,
dadurch gekennzeichnet, daß das Lamellenstück (26)
aus einem Abdeckbereich (26a) besteht, der sich
zu einer Mittelachsenseite über einen aufrechten
Bereich (26c) erstreckt, der von einer inneren
Umfangskante des Halters (13) leicht gegen eine
dem Schwungrad gegenüberliegende Seite ansteigt
und das Fensterloch (15) abdeckt, und einem
Schaufelbereich (26b), der gekrümmt ist und sich
zur Seite der Fensterlöcher (15) von einer Kante
auf der Rückseite hinsichtlich der Drehrichtung
(R) des Abdeckbereichs (26a) erstreckt.

(3)   Ein Kühlmechanismus einer Zugtypkupplung nach Anspruch 1,
dadurch gekennzeichnet, daß der Drahtring (10)
in ein gestuftes Teil (22) eines inneren Umfangsbereichs der Kupplungsabdeckung paßt.

(4)   Ein Kühlmechanismus einer Zugtypkupplung nach Anspruch 1,
dadurch gekennzeichnet, daß sich die Riemenplatte
(18) in einer inneren Umfangsrichtung des Kupplungsabdeckungsaufbaus (6) erstreckt und durch eine Niete (19) an einem äußeren Umfangsbereich der Kupplungsabdeckung (9) an einem Ende und durch eine Niete (20) an einem äußeren Umfangsvorsprung (21) der Druckplatte (7) am anderen Ende festgelegt ist.

(5)  Ein Kühlmechanismus einer Zugtypkupplung nach Anspruch 1,
dadurch gekennzeichnet, daß der ringförmige Halter (13), das streifenförmige Fußstück (23) und das Lamellenstück (26) in Integralbauweise durch eine Plattenbearbeitung ausgebildet sind.

# FIG.1

STIRNSEITE

21 18 19 20 12 9 6 5 10 22 7 27 L3 L2 L1 P1 13 14 23 24 25 26 15 2 11 17 (16) 3 P2 4

# FIG.2

24 R 12 24 26c 26a 26 23 26a 26b A 15 26b 16 26 26a 17 15 16 A 11 17 17 23

# INTERNATIONAL SEARCH REPORT

0272329

International Application No PCT/JP87/00329

## I. CLASSIFICATION OF SUBJECT MATTER (if several classification symbols apply, indicate all) 3

According to International Patent Classification (IPC) or to both National Classification and IPC

Int.Cl$^4$    F16D13/72

## II. FIELDS SEARCHED

| Minimum Documentation Searched 4 | |
|---|---|
| Classification System | Classification Symbols |
| IPC | F16D13/72 |

Documentation Searched other than Minimum Documentation
to the Extent that such Documents are Included in the Fields Searched 5

| | |
|---|---|
| Jitsuyo Shinan Koho | 1932 – 1987 |
| Kokai Jitsuyo Shinan Koho | 1971 – 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, Y1, 37-32809 (Adachi Kazuma) 22 December 1962 (22. 12. 62) Column 1, lines 12 to 23, Figs. 1 to 3 (Family: none) | 1 |
| A | JP, Y1, 46-16654 (Isuzu Motors Limited) 10 June 1971 (10. 06. 71) Column 2, lines 6 to 22, Figs. 1 to 2 (Family: none) | 1 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| August 4, 1987 (04. 08. 87) | August 17, 1987 (17. 08. 87) |
| International Searching Authority 1 | Signature of Authorized Officer 20 |
| Japanese Patent Office | |

Form PCT/ISA/210 (second sheet) (October 1977)